# EUROPÄISCHE PATENTSCHRIFT

(11) **EP 0 664 444 B1**
(45) Veröffentlichungstag und Bekanntmachung des Hinweises auf die Patenterteilung: **02.04.1997**
(21) Anmeldenummer: 95100456.3
(22) Anmeldetag: 14.01.1995
(51) Int. Cl.: G01N 1/22, F16L 1/10, G01M 15/00

(54) **Vorrichtung zur Entnahme von Gasproben aus offenen Leitungen**
Device for taking gas samples from open conduits
Dispositif pour la prise d'échantillons gazeux dans des conduites ouvertes

(30) Priorität: 18.01.1994 DE 4401223
(43) Veröffentlichungstag der Anmeldung: 26.07.1995
(73) Patentinhaber: Grundig E.M.V. Elektro-Mechanische Versuchsanstalt Max Grundig GmbH & Co. KG, 90762 Fürth (DE)
(72) Erfinder: Hassold, Hubert, c/o GRUNDIG E.M.V., D-90762 Fürth (DE); Löper, Werner, c/o GRUNDIG E.M.V., D-90762 Fürth (DE)

(56) Entgegenhaltungen:
- EP-A- 0 121 691
- EP-A- 0 279 318
- DE-U- 9 107 156
- US-A- 4 243 253
- US-A- 5 222 906

## Beschreibung

Die Erfindung betrifft eine Vorrichtung zur Entnahme von Gasproben aus offenen Leitungen, insbesondere aus Auspuffendrohren von Kraftfahrzeugen, gemäß dem Oberbegriff des Anspruches 1.

Zur Untersuchung von Abgasen von Kraftfahrzeugmotoren werden über eine Abgassonde, die durch ein flexibles Gasführungsteil mit dem Abgasmeßgerät verbunden ist, Abgasproben entnommen.

Das flexible Gasführungsteil muß biegsam ausgeführt sein, damit es in die offene Leitung eingeführt werden kann. Es muß weiterhin hitzebeständig sein, um Beeinträchtigungen der Funktionsweise bei der Vermessung von heißen Gasen oder der Berührung von heißen Oberflächen ausschließen zu können.

Aus dem deutschen Gebrauchsmuster DE-U1 87 05 323 ist ein rohrförmiges Gasführungsteil bekannt, das hohe Verschleißfestigkeit und Temperaturbeständigkeit aufweist und einfach in offene Leitungen eingeführt werden kann.

Das Gasführungselement besteht dort aus einer Schraubenfeder hoher Steifigkeit, einem biegsamen Kunststoffschlauch, der die Schraubenfeder umgibt, und einem Metallschlauch, der den Kunststoffschlauch umgibt.

Bei dieser Anordnung hat die Schraubenfeder, die eine hohe Steifigkeit aufweist, die Aufgabe, dem Gasführungsteil eine hohe Biegefestigkeit zu verleihen, während der Metallschlauch einen guten Schutz gegen mechanische und thermische Beschädigungen bietet.

Aus der deutschen Offenlegungsschrift DE-A1 3704862 ist ein Gasführungselement bekannt, bei dem um ein Gasführungselement eine Schraubenfeder, deren Wicklungen bündig aneinander liegen, angeordnet ist. Die Schraubenfeder ist mit einer Vorspannung, die beim Wickeln erzeugt wird, versehen, die dem Gasführungsteil eine hohe Biegefestigkeit verleiht.

Aus der US-Patentschrift US-PS 4,243,253 ist eine flexible Schlauchverbindung bekannt, bei der eine Schraubenfeder unter leichtem Druck zwischen zwei Endstücken angeordnet ist. Die Schraubenfeder ist von einem äußeren Schlauch umgeben und fest mit den Endstücken verbunden. Durch den Druck der Schraubenfeder in Verbindung mit dem äußeren Schlauch entsteht eine vorgegebene Biegefestigkeit der gesamten Schlauchverbindung.

Der Nachteil der bekannten Anordnungen besteht darin, daß die Biegefestigkeit des Gasführungsteiles bereits durch seine Herstellung, insbesondere durch die Steifigkeit bzw. der Vorspannung der Schraubenfeder, vorgegeben ist.

Insbesondere bei der Abgasmessung von Kraftfahrzeugmotoren ist eine Anpassung an gegebene Umstände, beispielsweise unterschiedliche Durchmesser der Auspuffendrohre oder verschiedene, durch nationale Vorschriften für die Abgasmeßtechnik festgelegte Eindringtiefen der Abgassonde in das Auspuffendrohr, nicht möglich.

Es ist deshalb Aufgabe der Erfindung, eine Vorrichtung zur Entnahme von Gasproben aus offenen Leitungen anzugeben, die die genannten Nachteile überwindet.

Diese Aufgabe wird bei einer Vorrichtung nach dem Oberbegriff des Anspruches 1 durch die kennzeichnenden Merkmale des Anspruches 1 gelöst. Vorteilhafte Ausgestaltungen der Erfindung sind in den abhängingen Ansprüchen angegeben.

Gemäß der Erfindung besteht das flexible Gasführungsteil aus einem biegsamen Gasführungsschlauch, einer Schraubenfeder mit geringer Steifigkeit, deren Windungen nicht eng aneinander liegen und die den biegsamen Gasführungsschlauch umgibt. Das Gasführungsteil enthält weiterhin einen biegsamen, in der Länge variablen und hitzebeständigen äußeren Schlauch, der die Schraubenfeder umgibt. Die Schraubenfeder wird beim Einbringen in den äußeren Schlauch zusammengedrückt und der äußere Schlauch wird in Achsrichtung gedehnt.

Die Biegefestigkeit kann eingestellt werden, indem das End- und/oder Griffteil derart mit dem äußeren Schlauch verbunden ist, daß die Eindringtiefe des äußeren Schlauches in das End- und/oder Griffteil variabel ist.

Auf diese Weise entsteht eine Verspannung der Schraubenfeder mit dem äußeren, in der Länge variablen Schlauch, die zu einer vom Grad der Verspannung abhängigen Biegefestigkeit führt. Der Grad der Verspannung und somit die Biegefestigkeit kann nach Bedarf, beispielsweise entsprechend länderspezifischer Vorgaben über die Eintauchtiefe des Gasführungsteiles in das Auspuffendrohr, eingestellt werden.

Gemäß einer vorteilhaften Ausführungsform der Erfindung ist das Endteil und/oder das Griffteil mit einem Gewinde versehen, das mit dem äußeren Schlauch in der Weise zusammenwirkt, daß eine Schraubverbindung entsteht. Je tiefer das Endteil und/oder das Griffteil mit dem äußeren Schlauch verschraubt wird, um so stärker wird die Schraubenfeder zusammengdrückt und der äußere Schlauch gespannt. Es entsteht auf diese Weise eine hohe Biegefestigkeit. Eine geringere Biegefestigkeit entsteht, wenn das End- und/oder Griffteil und der äußere Schlauch nur eine geringe Verschraubungstiefe aufweisen.

Durch die erfindungsgemäße Vorrichtung kann die Biegefestigkeit vom Bediener des Abgastestgerätes auf einfache Weise an die gegebenen Umstände angepaßt werden. Insbesondere kann bei einer geforderten großen Eindringtiefe in die offene Leitung die Biegefestigkeit erhöht werden. Bei gebogenen Leitungen kann eine Anpassung in der Art erfolgen, daß eine Biegefestigkeit eingestellt wird, bei der die notwendige Stabilität des Gasführungsteiles erreicht wird und zugleich die Biegungen der offenen Leitung nicht zu einem Hindernis werden.

Der Grad der Biegefestigkeit kann auch bereits vom Hersteller vorgegeben werden, indem an Stelle der Schraubverbindung eine feste, nicht lösbare Verbindung, beispielsweise durch Verlöten des äußeren Schlauches mit dem End- und/oder Griffteil, verwendet wird. In diesem Fall wird eine länderspezifische Anpassung bereits vom Hersteller vorgenommen und der Bediener hat hierauf keinen Einfluß mehr.

Gemäß einer weiteren vorteilhaften Ausgestaltung der Erfindung besteht der äußere Schlauch aus einem hitzebeständigen Metall, das auch ausreichend Schutz vor mechanischen Beschädigungen bietet.

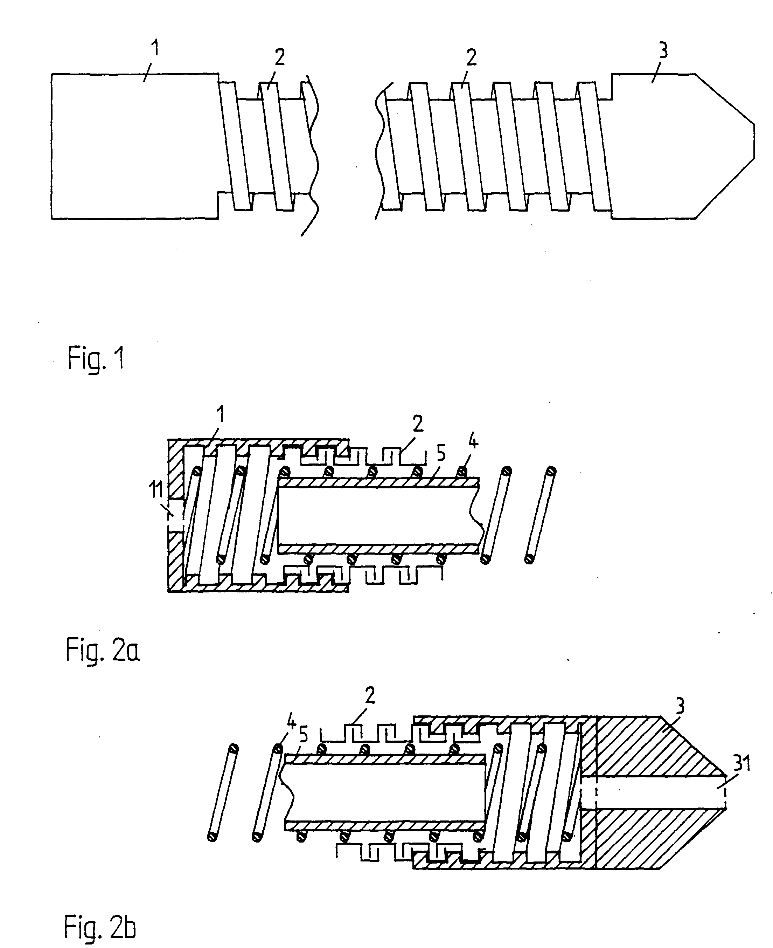

Im folgenden wird die Erfindung an Hand der Figuren 1 und 2 erläutert.

Es zeigen:
Figur 1 die Seitenansicht eines Gasführungsteiles und
Figur 2 die Querschnitte des Gasführungsteiles im Bereich des Griffstückes und des Endteiles.

In Figur 1 ist die Außenansicht der erfindungsgemäßen Vorrichtung zur Entnahme von Gasproben aus offenen Leitungen dargestellt. Sie besteht aus einem Griffteil 1, das mit dem Gasführungsteil verbunden ist. Von diesem Gasführungsteil ist in der Darstellung nur der äußere Schlauch 2 sichtbar. Das Griffteil 1 ist über eine weitere Gasführungsleitung, die in der Figur nicht dargestellt ist, mit dem Abgasmeßgerät verbunden.
Am anderen Ende des Gasführungsteiles ist das Endteil 3, das als Meßsonde dient, angeordnet.

Figur 2a zeigt den Querschnitt des Gasführungsteiles im Bereich des Griffstückes 1. Dieses Griffstück 1 weist eine Öffnung 11 auf, die zur Anbringung einer Gasführungsleitung, die zum Abgasmeßgerät führt, vorgesehen ist. Im Inneren des Griffstückes 1 befindet sich ein Gewinde, das so ausgeführt ist, daß es schraubenförmig mit dem äußeren Schlauch 2 des Gasführungsteiles verbunden werden kann.
Der äußere Schlauch 2 besteht vorzugsweise aus hitzebeständigem Metall, wobei ein Metalldraht mit S-förmigem Querschnitt spiralförmig gewickelt wird und die nebeneinanderliegenden Wicklungen ineinandergreifen.

Der so erhaltene Metallschlauch ist in seiner Länge variabel und in den zur Achsrichtung senkrechten Richtungen auslenkbar.
Innerhalb des äußeren Schlauches 2 ist eine Schraubenfeder 4 mit geringer Steifigkeit angeordnet. Die Schraubenfeder 4 ist im entlasteten Zustand länger als die maximale Länge des äußeren Schlauches 2.
Im Inneren der Schraubenfeder 4 ist ein biegsamer Gasführungsschlauch 5 angeordnet.

Figur 2b zeigt den Querschnitt des Gasführungsteiles im Bereich des Endteiles 3. Der Aufbau entspricht dem in Figur 2a, wobei anstelle des Griffstückes 1 das Endteil 3 mit der Öffnung 31 auf das Gasführungsteil aufgeschraubt ist.

Durch das Aufschrauben des Griffstückes 1 und des Endteiles 3 auf den äußeren Schlauch 2 wird die Schraubenfeder 4 zusammengedrückt und der äußere Schlauch 2 gespannt. Durch das Zusammenwirken der Federkraft der Schraubenfeder 4 einerseits und der Spannkraft des äußeren Schlauches 2 andererseits kann eine hohe Biegefestigkeit des Gasführungsteiles erreicht werden. Der besondere Vorteil dieser Anordnung besteht darin, daß die Biegefestigkeit durch die Einschraubtiefe des Endteiles 3 und/oder des Griffteiles 1 die Biegefestigkeit veränderbar und damit an vorgegebene Umstände anpaßbar ist.

Anstelle der Schraubverbindungen des Endteiles und des Griffteiles mit dem äußeren Schlauch sind auch andere Verbindungen denkbar, die eine variable Eindringtiefe zulassen.

## Patentansprüche

1. Vorrichtung zur Entnahme von Gasproben aus offenen Leitungen, insbesondere aus Auspuffendrohren von Kraftfahrzeugen, bestehend aus einem Endteil (3) mit gasdurchlässigen Öffnungen, einem flexiblen Gasführungsteil (2,4,5) und einem Griffteil (1), wobei
das flexible Gasführungsteil (2, 4, 5) aus einem biegsamen Gasführungsschlauch (5), einer Schraubenfeder (4) und einem biegsamen, in der Länge variierbaren und hitzebeständigen äußeren Schlauch (2), der die Schraubenfeder (4) umgibt, besteht, **dadurch gekennzeichnet**, daß die Schraubenfeder (4) eine geringe Steifigkeit hat, und daß sie den biegsamen Gasführungsschlauch (5) umgibt, wobei die Schraubenfeder (4) nach dem Einbringen in den äußeren Schlauch (2) zusammengedrückt und der äußere Schlauch (2) in Achsrichtung gedehnt ist, wobei
das End- und/oder Griffteil (3,1) zur Einstellung der Biegefestigkeit derart mit dem äußeren Schlauch (2) verbunden ist, daß die Eindringtiefe des äußeren Schlauchs (2) in das End- und/oder Griffteil (3,1) variabel ist.

2. Vorrichtung nach Anspruch 1,
**dadurch gekennzeichnet**, daß
das Endteil (3) und/oder das Griffteil (1) mit einem Gewinde versehen ist, das mit dem äußeren Schlauch (2) so zusammenwirkt, daß eine Schraubverbindung entsteht.

3. Vorrichtung nach Anspruch 1 oder 2,
**dadurch gekennzeichnet**, daß
die Schraubenfeder (4) im entlasteten Zustand länger ist als die maximale Länge des äußeren Schlauches (2).

4. Vorrichtung nach einem der Ansprüche 1 bis 3,
**dadurch gekennzeichnet**, daß der äußere Schlauch (2) aus hitzebeständigem Metall besteht, wobei ein Metalldraht mit S-förmigem Querschnitt spiralförmig gewickelt ist und die nebeneinanderliegenden Wicklungen ineinandergreifen.

## Claims

1. Device for taking gas samples from open conduits, particularly from the exhaust tail-pipes of motor vehicles, consisting of an end part (3) with gas-permeable openings, a flexible gas-conducting part (2, 4, 5) and a handle part (1), wherein the flexible gas-conducting part (2, 4, 5) consists of a bendable gas-conducting hose (5), a helical spring (4) and a bendable outer hose (2) which is variable in length and heat-resistant and which surrounds the helical spring (4), **characterised in that** the helical spring (4) has low rigidity and that it surrounds the bendable gas-conducting hose (5), while the helical spring (4) is compressed after insertion in the outer hose (2) and the said outer hose (2) is extended in the axial direction, and while the end part and/or handle part (3, 1) is connected, for the purpose of adjusting the bending resistance, to the outer hose (2) in such a way that the depth of penetration of the outer hose (2) into the end part and/or handle part (3, 1) is variable.

2. Device according to claim 1, **characterised in that** the end part (3) and/or the handle part (1) is provided with a thread which interacts with the outer hose (2) in such a way that a screwed connection is produced.

3. Device according to claim 1 or 2, **characterised in that** the helical spring (4) is longer, in the non-loaded condition, than the maximum length of the outer hose (2).

4. Device according to one of claims 1 to 3, **characterised in that** the outer hose (2) consists of heat-resistant metal, a metal wire with an S-shaped cross-section being coiled in the form of a spiral and the coils, which lie side by side, interlocking.

## Revendications

1. Dispositif pour prélever des échantillons de gaz dans des conduits ouverts, notamment dans des tuyaux d'échappement de véhicules automobiles, constitué par une partie d'extrémité (3) comportant des ouvertures laissant passer le gaz, une partie flexible (2,4,5) de guidage du gaz et une partie de poignée (1), la partie flexible (2, 4, 5) de guidage du gaz étant constituée par un tuyau flexible (5) de guidage du gaz, un ressort hélicoïdal (4) et un tuyau extérieur flexible (2) dont la longueur peut être modifiée et qui est résistant à la chaleur et entoure le ressort hélicoïdal (4), caractérisé en ce que le ressort hélicoïdal (4) possède une faible rigidité et qu'il entoure le tuyau flexible (5) de guidage du gaz, le ressort hélicoïdal (4) étant comprimé après son insertion dans le tuyau extérieur (2) et le tuyau extérieur (2) étant dilaté dans la direction axiale, et la partie d'extrémité et/la partie de poignée (3,1) servant à régler la résistance à la flexion étant reliée au tuyau extérieur (2) de telle sorte que la profondeur de pénétration du tuyau extérieur (2) dans la partie d'extrémité et/ou la partie de poignée (3,1) est variable.

2. Dispositif selon la revendication 1, caractérisé en ce que la partie d'extrémité (3) et/ou la partie de poignée (1) est pourvue d'un filetage, qui coopère avec le tuyau extérieur (2) de telle sorte qu'on obtient une liaison vissée.

3. Dispositif selon la revendication 1 ou 2, caractérisé en ce qu'à l'état non placé sous contrainte, le ressort hélicoïdal (4) a une longueur supérieure à la longueur maximale du tuyau extérieur (2).

4. Dispositif selon l'une des revendications 1 à 3, caractérisé en ce que le tuyau extérieur (2) est réalisé en un métal résistant à la chaleur, un fil métallique possédant une section transversale en forme de S étant enroulé sous forme spiralée, et les enroulements juxtaposés étant imbriqués les uns dans les autres.
